# DEMANDE DE BREVET EUROPEEN

(11) **EP 1 255 251 A1**
(43) Date de publication de la demande: **06.11.2002**
(21) Numéro de dépôt: 02291098.8
(22) Date de dépôt: 02.05.2002
(51) Int. Cl.: G11B 27/031, G06F 17/30, G06F 17/60, G07F 7/00

(54) **Procédé de traitement à distance d'un article, notamment procédé de numérisation sélective de bandes vidéo**

(30) Priorité: 02.05.2001 FR 0105869
(71) Demandeur: ClicknShoot, 42000 Saint-Etienne (FR)
(72) Inventeur: Ewenczyk, Raphaél, 42000 Saint-Etienne (FR); Perez, Michael, 75011 Paris (FR)
(74) Mandataire: Tanty, François

(57) **Abrégé**

La présente invention concerne un procédé de traitement à distance d'articles, notamment de numérisation sélective de bandes vidéo, caractérisé par le fait qu'il comporte les étapes consistant à :
a) se connecter depuis un poste utilisateur (1) à un site distant d'un réseau informatique, notamment Internet,
b) saisir sur le poste utilisateur (1) des informations concernant le traitement à effectuer sur l'article, notamment des données de début et de fin du ou des passages à traiter, et à envoyer ces informations au site distant,
c) envoyer à l'utilisateur un identifiant,
d) expédier l'article, accompagné dudit identifiant, à un centre de traitement,
e) traiter l'article au centre de traitement en fonction d'informations contenues dans l'identifiant et/ou mémorisées par le site distant lors de la connexion précitée et auquel il peut être accédé grâce à l'identifiant, notamment des informations permettant de piloter de manière automatique au moins un lecteur de bandes vidéo, l'étape c) pouvant éventuellement précéder l'étape b).

## Description

La présente invention concerne le traitement à distance d'articles, et notamment un procédé de numérisation sélective de bandes vidéo.

La conversion des bandes vidéo en fichiers numériques capables d'être lus par des ordinateurs de type PC requiert un équipement spécifique relativement coûteux si l'on souhaite des images de qualité. De nombreux particuliers ou entreprises n'en disposent pas. Or, il s'avère intéressant de mettre des extraits de bandes vidéo sur Internet, afin de permettre leur consultation à distance, par des proches ou des clients, par exemple.

Il est connu d'envoyer les bandes vidéo à numériser à des centres de traitement distants, accompagnées d'un formulaire contenant l'adresse de l'expéditeur. L'intégralité du contenu de la bande est numérisée, de sorte que si l'expéditeur ne souhaite en faire numériser qu'un extrait seulement, il doit recopier au préalable cet extrait sur une bande vierge et envoyer cette dernière au centre de traitement, opération fastidieuse. De plus, elle nécessite de disposer de deux magnétoscopes et des câbles de connexion adaptés. Enfin, le centre de traitement distant doit utiliser du personnel dédié à la saisie informatique des formulaires reçus, ce qui génère un coût de main-d'oeuvre non négligeable.

Par ailleurs, le traitement à distance de bandes vidéo en utilisant Internet pour envoyer des instructions sur les travaux à effectuer existe, mais il ne s'agit pas d'un traitement automatisé.

Il existe un besoin pour réduire le coût du traitement à distance d'un article, notamment un traitement de numérisation d'une bande vidéo.

Il existe également un besoin pour faciliter la numérisation d'extraits de bandes vidéo.

Il existe encore un besoin pour rendre aisé la sélection et l'obtention d'images individuelles extraites d'une bande vidéo.

La présente invention vise à répondre à l'un au moins de ces besoins.

Selon l'un de ses aspects, l'invention a pour objet un nouveau procédé de traitement à distance d'articles, qui peut se caractériser par le fait qu'il comporte les étapes consistant à :
a) se connecter depuis un poste utilisateur à un site distant d'un réseau informatique, notamment Internet,
b) saisir sur le poste utilisateur des informations concernant le traitement à effectuer sur l'article et envoyer ces informations au site distant,
c) envoyer à l'utilisateur un identifiant,
d) expédier l'article, accompagné de l'identifiant, à un centre de traitement,
e) traiter l'article au centre de traitement en fonction d'informations contenues dans l'identifiant et/ou mémorisées par le site distant lors de la connexion précitée et auxquelles il est accédé grâce à l'identifiant. L'étape c) peut éventuellement précéder l'étape b).

Lors de l'étape c), l'identifiant peut être envoyé au poste de l'utilisateur. En variante, l'utilisateur peut recevoir l'identifiant par courrier, avec une enveloppe à adresser au centre de traitement, l'identifiant étant dans ce cas, par exemple, un code à barres imprimé sur l'enveloppe ou inséré dans celle-ci.

Le procédé ci-dessus permet de réduire considérablement les opérations de saisie au niveau du centre de traitement puisqu'une grande partie des informations, notamment celles nécessaires pour retourner le résultat du traitement à l'expéditeur de l'article, celles permettant de le traiter et celles permettant de l'archiver peuvent déjà avoir été saisies par l'expéditeur lors de la connexion au site distant. De plus, le délai séparant la connexion au site distant et la réception de l'article à traiter par le centre de traitement peut avantageusement être mis à profit par celui-ci pour prévoir la charge de travail à venir et modifier le cas échéant les moyens matériels et/ou humains, par exemple.

Grâce à l'invention, la saisie de données dans le centre de traitement peut se limiter par exemple à scanner un code à barres servant d'identifiant ou à entrer une suite relativement courte de caractères alphanumériques. Le traitement des articles peut s'effectuer de manière automatisée, ce qui permet de réduire considérablement les charges salariales. De plus, les risques d'erreurs de traitement, par rapport à la demande du client, peuvent être réduits.

Dans le procédé précité, l'étape b) doit avoir lieu avant l'étape c) lorsque l'identifiant contient des informations concernant directement le traitement à effectuer.

Par contre, l'étape c) peut avoir lieu avant ou après l'étape b) lorsque l'identifiant sert seulement à accéder aux informations concernant le traitement à effectuer, mémorisées par le site distant lors de la connexion précitée.

L'invention s'applique au traitement d'une grande variété d'articles, notamment à la numérisation de bandes vidéo (enregistrées sur bande magnétique ou tout autre support et de format quelconque, notamment VHS, VHS-C, Hi8, Digital 8, DV, DVCAM, Super 8, 8, entre autres), aux traitements d'enregistrements sonores ou au développement de films, argentiques ou non, et à leur tirage sur un support papier ou sur un support informatique. Elle s'applique également aux tirages papiers ou informatiques d'images extraites de bandes vidéo.

En particulier, lorsque l'article à traiter est une bande vidéo, les informations saisies par l'expéditeur lors de la connexion au site distant comportent avantageusement des données de début et de fin du ou des passage(s) de la bande vidéo à traiter, c'est-à-dire des « time codes ». Ces données permettront de piloter de manière automatique les lecteurs utilisés dans le centre de traitement pour lire les bandes vidéo.

L'identifiant précité peut être de toute nature et notamment être une suite de caractères alphanumériques s'affichant à l'écran du poste utilisateur lors de la connexion au site distant ou un code à barres imprimé au moyen d'une imprimante reliée au poste utilisateur, ou des données programmées dans une puce introduite dans un lecteur du poste utilisateur, par exemple.

Lorsque l'identifiant est un code à barres, le procédé précité comporte avantageusement l'étape d'impression du code à barres, grâce par exemple à l'envoi par le site distant au poste utilisateur d'un fichier permettant l'impression du code à barres avec une qualité suffisante pour pouvoir être lu ultérieurement. Le code à barres peut en variante être imprimé sur une enveloppe envoyée à l'utilisateur et dans laquelle est placée la bande, cette enveloppe étant préaffranchie ou non.

Le résultat du traitement peut être retourné à l'expéditeur sous forme physique, enregistré sur un support tel que par exemple une disquette, une bande magnétique, un cédérom, un DVD ou une mémoire électronique. En variante, le résultat du traitement peut être envoyé par voie électronique à l'expéditeur, sous la forme d'un fichier joint ou d'une adresse électronique, par exemple. Ainsi, l'expéditeur peut être simplement informé, par messagerie électronique ou par courrier physique, que le traitement a été effectué et que le résultat de celui-ci est disponible sur un site pour être téléchargé ou visualisé. L'identifiant ayant servi lors de l'envoi de l'article au centre de traitement peut alors servir une nouvelle fois lors de la connexion au site distant pour visualiser ou récupérer le résultat du traitement.

Dans une mise en oeuvre particulière du procédé, l'identifiant peut n'être généré qu'après connaissance d'un compte bancaire de l'expéditeur à débiter. Outre les données bancaires et celles de début et de fin du ou des passage(s) à numériser, l'expéditeur peut aussi saisir des données concernant le type de format numérique souhaité et/ou les traitements d'images et/ou montages additionnels devant être effectués, ou des informations concernant le sujet de la vidéo.

Selon un autre aspect de l'invention qui peut être indépendant de ce qui précède, on peut permettre à au moins une personne de visualiser, notamment à distance après connexion à un site Internet, une séquence d'images issue du traitement de l'article et l'on peut permettre à cette personne visualisant la séquence de sélectionner au moins une image parmi l'ensemble des images de la séquence.

On peut ensuite envoyer à la personne ayant visualisé la séquence ou à tout autre destinataire dont les coordonnées seraient communiquées au site, une image correspondant à l'image sélectionnée mais ayant une résolution supérieure à celle de la séquence visualisée.

Cet envoi s'effectue par exemple par messagerie électronique ou par courrier par envoi d'un support matériel sur lequel l'image est directement apparente, par exemple un support argentique ou imprimé ou d'un support contenant l'image enregistrée sous une forme non apparente, par exemple une disquette, un CD-ROM ou un DVD.

En variante, on peut mettre à la disposition du destinataire sur un site une image correspondant à l'image sélectionnée mais ayant une définition supérieure à celle de la séquence visualisée.

Dans une mise en oeuvre particulière de l'invention, un code apparent est associé à chaque image de la séquence afin de permettre à la personne qui visualise la séquence d'identifier précisément l'image sélectionnée ou de pouvoir visualiser une image donnée connaissant son code.

En variante, un code non apparent peut être associé à chaque image de la séquence.

Le traitement de l'article peut comporter l'étape consistant à générer au moins deux fichiers correspondant aux mêmes images initiales mais avec des définitions différentes.

L'un de ces fichiers peut être utilisé pour l'affichage de la séquence en vue de la sélection par une personne d'au moins une image, un code étant par exemple inséré dans chaque image, et l'autre fichier être utilisé pour, une fois une image sélectionnée, permettre l'envoi ou la mise à disposition de l'image haute définition correspondante.

L'invention a encore pour objet un serveur informatique, caractérisé par le fait qu'il comporte des moyens pour :
a) permettre la connexion depuis un poste utilisateur distant, par l'intermédiaire d'un réseau informatique, notamment Internet, au serveur,
b) permettre la mémorisation de données saisies par l'utilisateur du poste utilisateur connecté au serveur, concernant le traitement à effectuer sur un article,
c) générer un identifiant spécifique, associé au traitement à effectuer sur l'article et à l'expéditeur,
d) permettre l'accès grâce à l'identifiant aux données de traitement associées et mémorisées par le serveur.

Dans une réalisation particulière, le serveur est agencé pour échanger des données avec un centre de traitement, de manière à permettre de piloter au moins un lecteur de bandes vidéo en fonction des données de traitement mémorisées auxquelles il est accédé grâce à cet identifiant.

Le serveur peut être agencé pour permettre la mémorisation de données issues du résultat du traitement effectué sur l'article. Dans le cas du traitement de vidéos, le serveur peut être agencé pour mémoriser les durées de traitement associées et l'adresse Internet du fichier vidéo de « streaming » créé sur un serveur de diffusion. Le « streaming » est une technique de lecture de fichier multimédia permettant à un internaute de lire en temps réel, un fichier vidéo compressé sans avoir à attendre son téléchargement complet.

Toujours dans une réalisation particulière, le serveur est configuré
- pour permettre à une personne
   - de visualiser une séquence d'images issues du traitement de l'article, ces images étant associées chacune à un code qui est de préférence apparent,
   - de sélectionner au moins une image de la séquence et
   - pour envoyer à une adresse communiquée par cette personne, par exemple par messagerie électronique, une image correspondant à l'image sélectionnée mais ayant une meilleure définition.

L'invention a encore pour objet un centre de traitement automatisé pour numériser de manière sélective des bandes vidéo, caractérisé par le fait qu'il comporte au moins un lecteur de bandes vidéo, au moins un clavier ou un scanner ou tout autre dispositif de saisie permettant d'entrer un identifiant, au moins une mémoire dans laquelle peuvent être mémorisées des données de traitement associées à cet identifiant, concernant le début et la fin du ou des passages à numériser, au moins un processeur pour aller rechercher dans ladite mémoire des données de traitement correspondant à l'identifiant saisi et commander le fonctionnement du lecteur en fonction de ces données, et des moyens pour numériser les signaux délivrés par le lecteur, par exemple sous la forme d'un fichier haute définition et d'un fichier basse définition. Un code peut être inséré dans chaque image basse définition afin de permettre à une personne visualisant la séquence d'identifier chaque image. Chaque image du fichier haute résolution peut être répertoriée de manière à établir un lien biunivoque avec chaque image du fichier basse définition.

L'invention sera mieux comprise à la lecture de la description détaillée qui va suivre, d'exemples de mise en oeuvre non limitatifs, et à l'examen du dessin annexé, qui fait partie intégrante de la description, sur lequel :
- la figure 1 représente de manière schématique un poste utilisateur relié, par l'intermédiaire du réseau Internet, à un serveur d'un site distant lui-même relié à un poste informatique d'un centre de traitement,
- la figure 2 représente une variante dans laquelle le site distant et le centre de traitement communiquent l'intermédiaire d'un réseau informatique, notamment Internet,
- la figure 3 représente une variante dans laquelle le serveur de diffusion est distant du centre de traitement relié à ce dernier par Internet,
- la figure 4 est un schéma en blocs illustrant un exemple de mise en oeuvre d'un procédé de l'invention,
- la figure 5 est un schéma en blocs d'une variante de mise en oeuvre de l'invention,
- la figure 6 est un schéma en blocs illustrant un autre aspect de l'invention, et
- la figure 7 représente de manière schématique la page d'un site sur lequel l'utilisateur peut visualiser une séquence et sélectionner au moins une image.

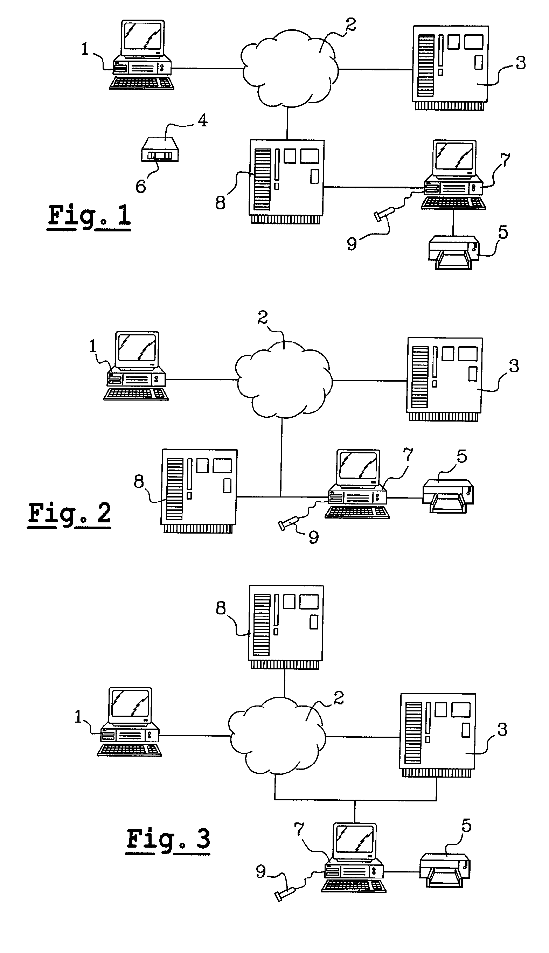

On a représenté sur la figure 1 divers moyens nécessaires à la mise en oeuvre de l'invention, pour numériser de manière sélective une bande vidéo 4. Cette dernière est destinée à être expédiée à un centre de traitement, par un expéditeur ayant à sa disposition un poste informatique 1 pouvant se connecter par Internet à un serveur informatique 3.

Le centre de traitement comporte au moins un lecteur 5, un poste informatique 7 pour piloter le ou les lecteurs 5 et traiter le signal lu de manière à le transformer en un ou plusieurs fichiers informatiques lisibles par un ordinateur personnel. Le centre de traitement peut comporter en outre, comme dans l'exemple décrit, un lecteur 9 de codes à barres et un serveur de diffusion 8 adapté à permettre la lecture en direct par des internautes de fichiers compressés, selon la technique de « streaming ».

L'expéditeur peut être par exemple une agence immobilière et la bande vidéo 4 contenir des séquences concernant différents biens immobiliers mis en vente ou en location par cette agence immobilière. Le transfert et la transformation des données contenues dans la bande vidéo 4 sous un format lisible par un ordinateur personnel est destiné à permettre aux clients de l'agence de visualiser les biens disponibles en se connectant au site Internet de celle-ci ou à une adresse Internet donnée par l'agence, permettant une connexion directement au serveur de diffusion 8.

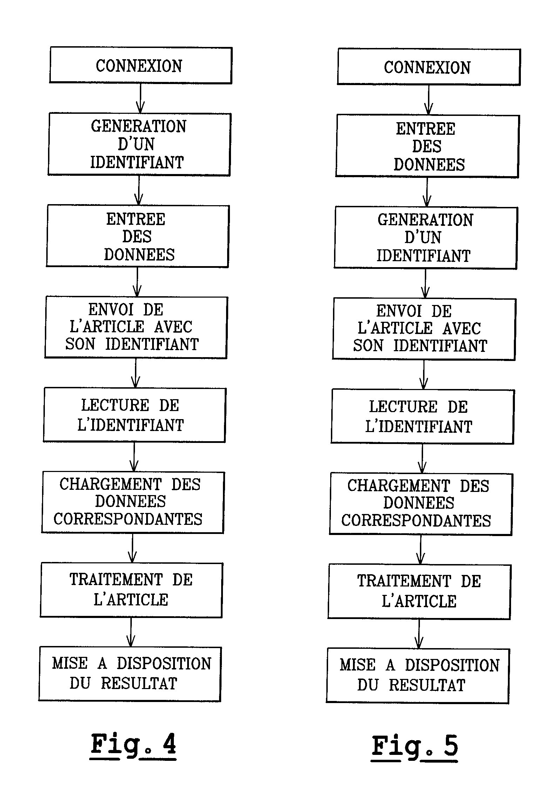

Conformément à un exemple de mise en oeuvre de l'invention, l'expéditeur se connecte au serveur 3 avec le poste utilisateur 1 et saisit sur ce dernier un certain nombre d'informations, parmi lesquelles par exemple son nom, son adresse, un numéro de carte bancaire, sa date d'expiration et le début et la fin du ou des passages de la bande vidéo 4 à transformer en fichiers lisibles par un ordinateur personnel. Lors de la connexion au serveur 3, comme illustré à la figure 4, ou en variante seulement après avoir rentré toutes les informations demandées, comme illustré à la figure 5, le serveur 3 envoie au poste utilisateur 1 un identifiant que l'expéditeur devra joindre à son envoi. Dans une variante, l'utilisateur reçoit par courrier l'identifiant.

Dans l'exemple particulier décrit, qui n'est nullement limitatif de l'invention, le serveur 3 adresse au poste utilisateur 1 des informations suffisantes pour permettre l'impression par celui-ci d'un code à barres 6 qui pourra ensuite être découpé et collé sur la cassette ou simplement mis dans la même enveloppe que celle-ci. Outre les informations temporelles de début et de fin du ou des passages à traiter, l'expéditeur peut saisir également des informations concernant un ou plusieurs montages à effectuer, c'est-à-dire par exemple l'ordre dans lequel les différents passages de la cassette qui seront traités devront être enregistrés sur un support informatique par le centre de traitement ou encore des informations sur le contenu de la vidéo (thème, descriptif, ...).

A la réception de la bande vidéo 4, accompagnée de l'identifiant 6, le centre de traitement saisit l'identifiant 6, par exemple au moyen d'un scanner 9 s'il s'agit d'un code à barres.

A partir des informations contenues dans cet identifiant 6, le centre de traitement remonte aux données saisies par l'expéditeur 1 lors de la connexion au serveur 3, notamment aux données de traitement à effectuer, qui ont été mémorisées par le serveur 3.

Le traitement peut ensuite être mené de manière totalement automatisée grâce à un programme permettant au poste informatique 7 de piloter le lecteur 5 dans lequel la bande vidéo 4 a été introduite, en fonction des données de début et de fin mémorisées.

Une fois le traitement effectué, la bande vidéo 4 peut être retournée à l'expéditeur, accompagnée d'un support informatique tels qu'une disquette, un cédérom ou un DVD, cette liste n'étant pas limitative.

Dans une variante, seule la bande vidéo 4 est retournée à l'expéditeur et celui-ci est informé de la possibilité de visualiser ou télécharger le résultat du traitement en se connectant au serveur de diffusion 8 et en utilisant par exemple l'identifiant précédemment attribué pour être autorisé à visualiser ou télécharger le résultat du traitement.

Dans une autre variante, le résultat du traitement est envoyé sous la forme d'une adresse électronique ou d'un fichier joint, par messagerie électronique, à une adresse informatique donnée par l'expéditeur.

On peut également se servir de l'identifiant pour mémoriser dans celui-ci tout ou partie des informations relatives au traitement à effectuer, par exemple le début et la fin du ou des passage(s) de la bande vidéo à traiter. L'inconvénient peut alors être de rendre l'identifiant plus long si la quantité des informations à coder l'impose, mais en revanche le traitement peut être facilité puisqu'il peut ne plus être nécessaire, à la réception de la bande vidéo 4 accompagnée de l'identifiant 6, de rechercher dans le serveur 3 des données de traitement mémorisées, celles-ci étant directement accessibles par simple lecture de l'identifiant 6.

Le centre de traitement peut être situé géographiquement au même emplacement que le serveur 3, le poste informatique 7 servant à piloter le ou les lecteur(s) 5 utilisé(s) pour lire les bandes vidéo 4 pouvant être relié par des câbles au serveur 3.

En variante, comme illustré à la figure 2, le centre de traitement peut être géographiquement très éloigné du serveur 3 et communiquer avec ce dernier par un réseau informatique, par exemple Internet. Dans ce cas, le centre de traitement pourra communiquer avec le serveur 3 à la réception d'une bande vidéo 4 accompagnée de son identifiant 6, pour récupérer les données de traitement répertoriées sous cet identifiant.

Dans une autre variante, illustrée à la figure 3, le serveur de diffusion 8 est distant du centre de traitement et relié à ce dernier par Internet.

Bien entendu, l'invention n'est pas limitée aux exemples qui viennent d'être donnés.

Elle s'applique au traitement d'articles autres que des bandes vidéo, notamment au traitement d'enregistrements sonores, tels que des cassettes de dictaphone. Dans ce cas, les données de traitement peuvent correspondre par exemple au format sous lequel l'expéditeur souhaite que le texte soit dactylographié.

L'invention s'applique également au développement et au tirage d'images extraites d'une bande vidéo, les données de traitement correspondant par exemple au « time code » de l'image choisie, au nombre d'exemplaires souhaité, au format et à la nature du tirage, mat ou brillant.

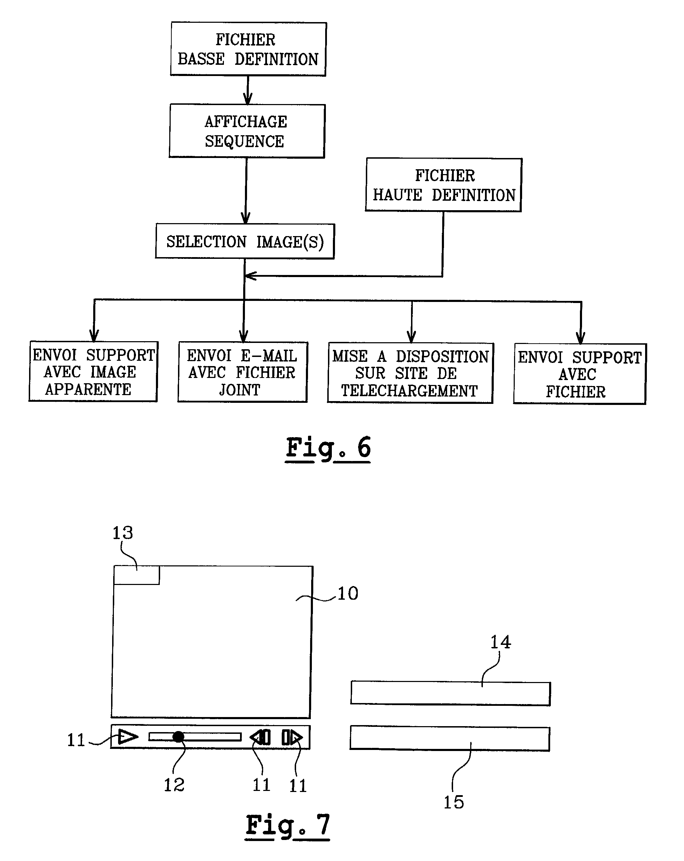

On va maintenant décrire en référence aux figures 6 et 7 un exemple de mise en oeuvre de l'invention dans lequel des images haute définition sont adressées à une ou plusieurs personnes après traitement de la bande vidéo.

La bande vidéo peut par exemple correspondre au film d'un événement, notamment familial.

Ce film peut être enregistré sur un support quelconque et envoyé au centre de traitement qui le numérise sous la forme d'un fichier basse définition et d'un fichier haute définition.

Les images du fichier basse définition peuvent être visualisées, au moins en partie, par affichage d'une séquence sur un site Internet.

Un tel site peut comporter, comme illustré à la figure 7, une zone d'affichage 10 de l'image et des boutons 11 de commande du défilement de l'image, notamment un curseur 12.

Dans un coin de la zone d'affichage de l'image est également affiché un code 13, qui correspond par exemple à un « time code » constitué par un numéro d'image, permettant à toute personne qui visualise la séquence de repérer les images.

Le code 13 qui s'affiche a par exemple été intégré par incrustation à l'image basse définition directement lors de la genèse du fichier correspondant, ce qui peut simplifier la lecture de la séquence.

Le site peut notamment comporter, sur la même page que celle sur laquelle les images sont affichées, un champ 14 permettant d'entrer l'adresse e-mail où doit être adressée l'image haute définition correspondant à l'image sélectionnée ainsi qu'un champ 15 permettant d'entrer le code de l'image sélectionnée.

Le site est configuré pour, en fonction du code de l'image sélectionnée, envoyer à l'adresse e-mail entrée par l'utilisateur l'image correspondante extraite du fichier haute définition.

A la réception de l'e-mail, avec l'image haute définition en fichier joint, le destinataire peut procéder lui-même à l'impression de l'image.

L'affichage de la séquence peut s'effectuer, le cas échéant, après chargement sur le poste de l'utilisateur d'un logiciel permettant d'exécuter des fichiers vidéos, par exemple Quicktime®.

Plutôt que d'envoyer l'image haute définition sous la forme d'un fichier joint à un e-mail on peut, sans sortir du cadre de la présente invention, adresser au destinataire un support avec l'image apparente, un tel support étant par exemple un papier argentique ou tout autre type de support, par exemple textile.

On peut encore envoyer l'image sous la forme non apparente d'un fichier enregistré sur un support tel que par exemple une disquette, un CD-ROM ou un DVD, à charge pour le destinataire d'éditer l'image et de l'imprimer.

L'image haute définition peut encore être mise à disposition sur un site de téléchargement.

## Revendications

1. Procédé de traitement à distance d'articles, notamment de numérisation sélective de bandes vidéo, **caractérisé par le fait qu'**il comporte les étapes consistant à :
a) se connecter depuis un poste utilisateur (1) à un site distant d'un réseau informatique, notamment Internet,
b) saisir sur le poste utilisateur (1) des informations concernant le traitement à effectuer sur l'article, notamment des données de début et de fin du ou des passages à traiter, et à envoyer ces informations au site distant,
c) envoyer à l'utilisateur un identifiant,
d) expédier l'article, accompagné dudit identifiant, à un centre de traitement,
e) traiter l'article au centre de traitement en fonction d'informations contenues dans l'identifiant et/ou mémorisées par le site distant lors de la connexion précitée et auquel il peut être accédé grâce à l'identifiant, notamment des informations permettant de piloter de manière automatique au moins un lecteur de bandes vidéo, l'étape c) pouvant éventuellement précéder l'étape b).

2. Procédé selon la revendication 1, **caractérisé par le fait qu'**à l'étape c) l'identifiant est envoyé au poste utilisateur (1).

3. Procédé selon la revendication 1 ou 2, **caractérisé par le fait que** l'étape b) a lieu avant l'étape c), l'identifiant contenant des informations concernant directement le traitement à effectuer.

4. Procédé selon la revendication 1 ou 2, **caractérisé par le fait que** l'étape c) a lieu avant ou après l'étape b), l'identifiant servant seulement à accéder aux informations concernant le traitement à effectuer, mémorisées par le site distant lors de la connexion précitée.

5. Procédé selon l'une quelconque des revendications précédentes, **caractérisé par le fait que** l'article est une bande vidéo (4) et **par le fait que** les informations saisies par l'expéditeur lors de la connexion au site distant comportent des données de début et de fin du ou des passage(s) à traiter.

6. Procédé selon l'une quelconque des revendications précédentes, **caractérisé par le fait que** l'identifiant est un code à barres (6) imprimé au moyen d'une imprimante reliée au poste utilisateur (1).

7. Procédé selon l'une quelconque des revendications 1 à 5, **caractérisé par le fait que** l'identifiant est une suite de caractères alphanumériques s'affichant à l'écran du poste utilisateur (1).

8. Procédé selon la revendication 1, **caractérisé par le fait que** l'identifiant est imprimé sur une enveloppe adressée à l'utilisateur ou inséré dans celle-ci.

9. Procédé selon l'une quelconque des revendications précédentes, **caractérisé par le fait que** le résultat du traitement est retourné à l'expéditeur sous forme physique, notamment sous la forme d'un support informatique.

10. Procédé selon l'une quelconque des revendications 1 à 8, **caractérisé par le fait que** le résultat du traitement est envoyé par voie électronique, notamment sous la forme d'un fichier joint ou d'une adresse électronique, notamment l'adresse Internet d'un fichier vidéo de "streaming" créé sur un serveur de diffusion.

11. Procédé selon l'une quelconque des revendications 1 à 8, **caractérisé par le fait que** l'expéditeur est informé par messagerie électronique ou par courrier physique que le traitement a été effectué et que le résultat de celui-ci est disponible pour être téléchargé ou visualisé sur un site Internet.

12. Procédé selon l'une quelconque des revendications précédentes, **caractérisé par le fait que** l'identifiant n'est généré par le site distant qu'après connaissance d'un compte bancaire de l'expéditeur à débiter.

13. Procédé selon l'une quelconque des revendications précédentes, **caractérisé par le fait que** les articles sont des bandes vidéo, à numériser de manière sélective et **par le fait que** le traitement qui est effectué est un traitement de numérisation.

14. Procédé selon l'une quelconque des revendications 1 à 13, **caractérisé par le fait que** l'on permet à au moins une personne de visualiser, notamment à distance, une séquence d'images issue du traitement de l'article et **par le fait que** l'on permet à la personne visualisant la séquence de sélectionner au moins une image.

15. Procédé selon la revendication 14, **caractérisé par le fait que** l'on envoie à un destinataire une image correspondant à l'image sélectionnée mais ayant une résolution supérieure à celle de la séquence visualisée.

16. Procédé selon la revendication 15, **caractérisé par le fait que** l'envoi s'effectue par messagerie électronique.

17. Procédé selon la revendication 15, **caractérisé par le fait que** l'envoi s'effectue sous la forme d'un support matériel sur lequel l'image est directement apparente.

18. Procédé selon la revendication 15, **caractérisé par le fait que** l'envoi s'effectue sous la forme d'un support contenant l'image non apparente sous une forme enregistrée.

19. Procédé selon la revendication 14, **caractérisé par le fait que** l'on met à disposition du destinataire, sur un site, une image correspondant à l'image sélectionnée et ayant une résolution supérieure à celle de la séquence visualisée.

20. Procédé selon l'une quelconque des revendications 14 à 19, **caractérisé par le fait qu'**un code apparent (13) est associé à chaque image de la séquence.

21. Procédé selon l'une quelconque des revendications précédentes, **caractérisé par le fait que** le traitement de l'article comporte l'étape consistant à générer au moins deux fichiers correspondant aux mêmes images initiales mais avec des définitions différentes, un code étant inséré dans chaque image du fichier basse définition.

22. Serveur informatique (3) pour la mise en oeuvre d'un procédé de numérisation sélective de bandes vidéo, **caractérisé par le fait qu'**il comporte des moyens pour :
a) permettre la connexion depuis un poste utilisateur (1) distant, par l'intermédiaire d'un réseau informatique, notamment Internet, à un serveur (3),
b) permettre la mémorisation de données saisies par l'utilisateur du poste (1) connecté au serveur (3), concernant le traitement à effectuer sur une bande vidéo, notamment des données de début et de fin du ou des passages à traiter.
c) mémoriser lesdites données concernant le traitement à effectuer,
d) générer un identifiant spécifique, associé au traitement à effectuer sur la bande vidéo et à l'expéditeur,
e) permettre l'accès grâce à l'identifiant aux données de traitement associées, mémorisées par le serveur (3).

23. Serveur selon la revendication 22, **caractérisé par le fait qu'**il est agencé pour échanger des données avec un centre de traitement, de manière à permettre de piloter au moins un lecteur (5) de bandes vidéo en fonction de données de traitement mémorisées auxquelles il est accédé grâce à l'identifiant.

24. Serveur selon la revendication précédente, **caractérisé par le fait qu'**il est agencé pour permettre la mémorisation de données issues du résultat du traitement effectué.

25. Serveur selon la revendication précédente, **caractérisé par le fait que** les dites données comprennent des durées de traitement associées.

26. Serveur selon l'une des deux revendications précédentes, **caractérisé par le fait que** lesdites données comprennent une adresse Internet d'un fichier de «streaming» créé sur un serveur de diffusion (8).

27. Serveur selon l'une quelconque des revendications 22 à 26, **caractérisé par le fait qu'**il est configuré pour permettre à une personne de visualiser une séquence d'images issue du traitement de l'article, associées chacune à un code apparent et de sélectionner au moins une image de la séquence, et pour envoyer à une adresse communiquée par cette personne une image correspondant à l'image sélectionnée mais ayant une meilleure définition.

28. Centre de traitement automatisé pour numériser de manière sélective des bandes vidéo (4), **caractérisé par le fait qu'**il comporte au moins un lecteur (5) de bandes vidéo, au moins un clavier ou un scanner (9) ou tout ou autre dispositif de saisie permettant d'entrer un identifiant (6), au moins une mémoire (3) dans laquelle sont mémorisées des données de traitement associées à cet identifiant, concernant le début et la fin du ou des passages à numériser et au moins un processeur (7) pour aller rechercher dans la mémoire des données de traitement correspondant à l'identifiant saisi et commander le fonctionnement du lecteur (5) en fonction de ces données, et des moyens (7) pour numériser les signaux délivrés par le lecteur (5).
